# EUROPEAN PATENT APPLICATION

(11) **EP 4 549 751 A1**
(43) Date of publication of application: **07.05.2025**
(21) Application number: 22949367.1
(22) Date of filing: 29.06.2022
(51) Int. Cl.: F15B 21/048, F15B 20/00

(54) **FLUID CONTROL DEVICE, FLUID PRESSURE SUPPLY APPARATUS, AND FLUID CONTROL METHOD**

(71) Applicant: SMC Corporation, Tokyo 101-0021 (JP)
(72) Inventor: OE Natsuki, 300-2493 Ibaraki (JP)
(74) Representative: Keil & Schaafhausen Patentanwälte PartGmbB
(86) International application number: PCT/JP2022/026016
(87) International publication number: WO 2024/004092

(57) **Abstract**

A fluid control device (10) comprises: a pressure regulating valve control unit (76) that controls a pressure regulating valve (50) so as to output a fluid from the pressure regulating valve at a second pressure (P2) lower than a first pressure (P1) when the flowrate (F) of the fluid is determined to be equal to or lower than a threshold value (FT) continuously for a first prescribed time (TM1) or longer and when a standby mode is permitted by an operator; and a shutoff valve control unit (80) that controls a shutoff valve (54) so as to shut off supplying of the fluid to an external device (42) when a second prescribed time (TM2) has elapsed in the standby mode.

## Description

### TECHNICAL FIELD

The present invention relates to a fluid control device, a fluid pressure supply apparatus (device), and a fluid control method.

### BACKGROUND ART

In US 2019/257329 A1, a fluid control device is disclosed that shifts to a hold mode when a flow rate of air in a working mode becomes less than or equal to a threshold value. In the hold mode, the air is provided to an external fluid device at a lower pressure than in the working mode.

### SUMMARY OF THE INVENTION

In accordance with the fluid control device disclosed in US 2019/257329 A1, the fluid is supplied even in the case that the supply of the fluid to the external device is unnecessary. Accordingly, a problem arises in that the fluid is consumed unnecessarily.

The present invention has the object of solving the aforementioned problem.

A first aspect of the present invention is characterized by a fluid control device configured to control a valve module equipped with a pressure adjusting valve configured to be capable of adjusting a pressure of a fluid supplied from a fluid supply source, and a disconnection valve configured to be capable of disconnecting a supply of the fluid output from the pressure adjusting valve to an external device, the fluid control device comprising a flow rate acquisition unit configured to acquire from a flow rate meter a flow rate of the fluid passing through the valve module, a flow rate determination unit configured to determine whether or not the flow rate that was acquired is less than or equal to a threshold value continuously at least for a first predetermined time period, a pressure adjusting valve control unit which is configured, in the case that it is determined that the flow rate acquired during an operation mode in which the fluid is output at a first pressure from the pressure adjusting valve is continuously less than or equal to the threshold value for at least the first predetermined time period, and a standby mode from an operator is permitted, to control the pressure adjusting valve in a manner so that the fluid is output from the pressure adjusting valve at a second pressure which is lower than the first pressure, and to switch the operation mode to the standby mode, and a disconnection valve control unit which is configured, in the case that a second predetermined time period has elapsed during the standby mode, to control the disconnection valve in a manner so that the supply of the fluid output from the pressure adjusting valve to the external device is disconnected, and to switch the standby mode to an isolation mode.

A second aspect of the present invention is characterized by a fluid pressure supply device comprising the fluid control device according to the first aspect, and the valve module.

A third aspect of the present invention is characterized by a fluid control method of controlling a valve module equipped with a pressure adjusting valve configured to be capable of adjusting a pressure of a fluid supplied from a fluid supply source, and a disconnection valve configured to be capable of disconnecting a supply of the fluid output from the pressure adjusting valve to an external device, the fluid control method comprising a flow rate acquisition step of acquiring from a flow rate meter a flow rate of the fluid passing through the valve module, a flow rate determination step of determining whether or not the flow rate that was acquired is less than or equal to a threshold value continuously for at least a first predetermined time period, a first pressure adjusting valve controlling step in which, in the case that it is determined that the flow rate acquired during an operation mode in which the fluid is output at a first pressure from the pressure adjusting valve is continuously less than or equal to the threshold value for at least the first predetermined time period, and a standby mode from an operator is permitted, the pressure adjusting valve is controlled at a second pressure which is lower than the first pressure, and the operation mode is switched to the standby mode, and a first disconnection valve controlling step in which, in the case that a second predetermined time period has elapsed during the standby mode, the disconnection valve is controlled in a manner so that the supply of the fluid output from the pressure adjusting valve to the external device is disconnected, and the standby mode is switched to an isolation mode.

According to the present invention, an amount of the fluid supplied to the external device can be reduced.

### BRIEF DESCRIPTION OF DRAWINGS

[FIG. 1] FIG. 1 is a diagram showing a configuration of a fluid pressure supply device including a fluid control device and a valve module according to an embodiment;
[FIG. 2] FIG. 2 is a circuit diagram of the valve module in an operation mode and a standby mode;
[FIG. 3] FIG. 3 is a circuit diagram of the valve module in an isolation mode;
[FIG. 4] FIG. 4 is a time chart illustrating changes in a flow rate and a pressure of the fluid that is supplied to an external device;
[FIG. 5] FIG. 5 is a flowchart showing a processing procedure of a fluid control process performed by the fluid control device in the case that the operation mode is switched to the standby mode;
[FIG. 6] FIG. 6 is a flowchart showing a processing procedure of a fluid control process performed by the fluid control device in the case that the standby mode is switched to the operation mode or the isolation mode;
[FIG. 7] FIG. 7 is a flowchart showing a processing procedure of a fluid control process performed by the fluid control device in the case that the isolation mode is switched to the operation mode;
[FIG. 8] FIG. 8 is a circuit diagram of the valve module in the operation mode;
[FIG. 9] FIG. 9 is a circuit diagram of the valve module in the standby mode;
[FIG. 10] FIG. 10 is a circuit diagram of the valve module in the isolation mode;
[FIG. 11] FIG. 11 is a flowchart showing a processing procedure of a fluid control process performed by the fluid control device in the case that the standby mode is switched to the operation mode or the isolation mode;
[FIG. 12] FIG. 12 is a flowchart showing a processing procedure of a fluid control process performed by the fluid control device in the case that the isolation mode is switched to the operation mode;
[FIG. 13] FIG. 13 is a flowchart for describing a processing procedure of a fluid control process performed by the fluid control device in the case that there was an instruction to prohibit a transition to the isolation mode;
[FIG. 14] FIG. 14 is a flowchart for describing a processing procedure of a fluid control process performed by the fluid control device in the case that the isolation mode is switched to the standby mode; and
[FIG. 15] FIG. 15 is a flowchart for describing a processing procedure of a fluid control process performed by the fluid control device in the case that there was an instruction to prohibit a transition to the standby mode.

### DESCRIPTION OF THE INVENTION

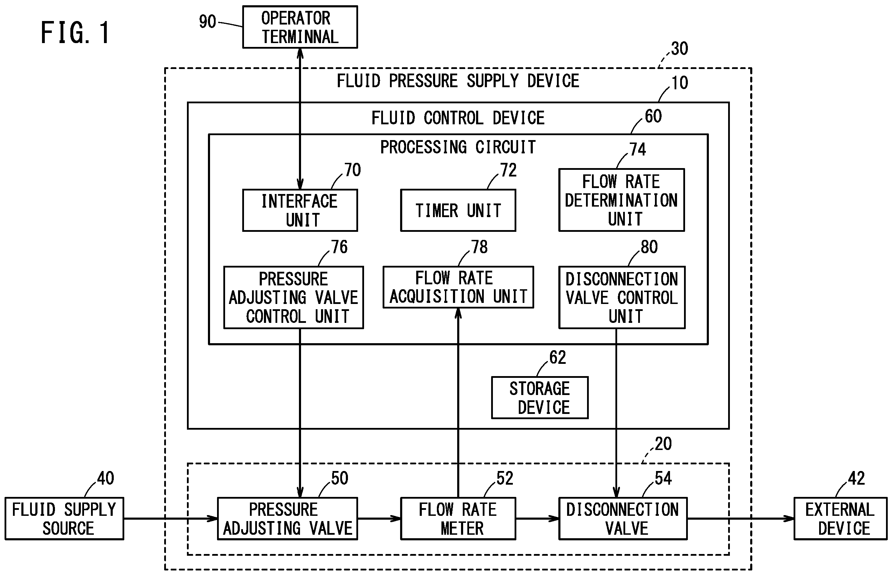

FIG. 1 is a diagram showing a configuration of a fluid pressure supply device 30 including a fluid control device 10 and a valve module 20 according to an embodiment. The fluid control device 10 serves to control the valve module 20. A fluid (for example, air) that is supplied from a fluid supply source 40 passes through a piping and flows into an inflow port of the valve module 20. The fluid that has flowed into the inflow port of the valve module 20 passes through the valve module, and flows out from an outflow port of the valve module 20. The fluid that has flowed out from the outflow port of the valve module 20 passes through a piping, and is supplied to an external device 42. The valve module 20 includes a pressure adjusting valve 50, a flow rate meter 52, and a disconnection valve 54.

The pressure adjusting valve 50 is capable of adjusting the pressure of the fluid supplied from the fluid supply source 40. In the present embodiment, the pressure adjusting valve 50 is a proportional control valve that adjusts the pressure of the fluid in response to an electrical signal. The pressure adjusting valve 50 includes a main valve, and a pilot valve that adjusts a degree of opening of the main valve. The fluid supplied from the fluid supply source 40 flows into an inlet port of the pressure adjusting valve 50. The inlet port of the pressure adjusting valve 50 communicates with the inflow port of the aforementioned valve module 20. Moreover, it should be noted that the inlet port of the pressure adjusting valve 50 may also serve as the inflow port of the aforementioned valve module 20.

The pressure of the fluid that has flowed into the inlet port of the pressure adjusting valve 50 is adjusted in accordance with the degree of opening of the main valve. The fluid whose pressure has been adjusted flows out of an outlet port of the pressure adjusting valve 50. The fluid output from the pressure adjusting valve 50 is directed toward the disconnection valve 54.

The flow rate meter 52 measures a flow rate F of the fluid through the valve module 20. In the present embodiment, the flow rate meter 52 measures the flow rate F of the fluid that is output from the pressure adjusting valve 50 and flows toward the disconnection valve 54.

At a time at which the disconnection valve 54 is open, the fluid output from the pressure adjusting valve 50 is supplied to the external device 42. The disconnection valve 54 includes a main valve, and a pilot valve that opens and closes the main valve. The disconnection valve 54, by closing the main valve, disconnects the supply of the fluid output from the pressure adjusting valve 50 to the external device 42.

The fluid output from the pressure adjusting valve 50 flows into an inlet port of a disconnection valve 54. In the case that the main valve of the disconnection valve 54 is open, the fluid that has entered into the inlet port of the disconnection valve 54 flows out from the outlet port of the disconnection valve 54. The outlet port of the disconnection valve 54 communicates with the outflow port of the aforementioned valve module 20. The fluid that has flowed out from the outlet port of the disconnection valve 54 is directed toward the external device 42. In this manner, the supply of the fluid output from the pressure adjusting valve 50 to the external device 42 is realized. Moreover, it should be noted that the outlet port of the disconnection valve 54 may serve as the outflow port of the aforementioned valve module 20.

In the case that the main valve of the disconnection valve 54 is closed, the fluid that has entered into the inlet port of the disconnection valve 54 does not flow out of the outlet port of the disconnection valve 54. More specifically, when the main valve of the disconnection valve 54 is closed, the supply of the fluid output from the pressure adjusting valve 50 to the external device 42 is disconnected.

The fluid control device 10 includes a processing circuit 60 and a storage device 62. The processing circuit 60 includes a processor such as a CPU or a GPU or the like. The storage device 62 includes a volatile memory such as a RAM or the like, and a nonvolatile memory such as a ROM or a flash memory or the like. The volatile memory is used as a working memory of the processor. The nonvolatile memory stores programs to be executed by the processor and other necessary data.

The processing circuit 60 includes an interface unit 70, a timer unit 72, a flow rate determination unit 74, a pressure adjusting valve control unit 76, a flow rate acquisition unit 78, and a disconnection valve control unit 80. By the processing circuit 60 executing a program that is stored in the storage device 62, the interface unit 70, the timer unit 72, the flow rate determination unit 74, the pressure adjusting valve control unit 76, the flow rate acquisition unit 78, and the disconnection valve control unit 80 are realized. At least a portion from among the interface unit 70, the timer unit 72, the flow rate determination unit 74, the pressure adjusting valve control unit 76, the flow rate acquisition unit 78, and the disconnection valve control unit 80 may be realized by an integrated circuit such as an ASIC or an FPGA or the like, or alternatively, by an electronic circuit including a discrete device.

The interface unit 70 performs two-way communications with an operator terminal 90 via wireless communications. The interface unit 70 may also perform two-way communications with the operator terminal 90 by way of wired communications. The interface unit 70 acquires instructions of the operator from the operator terminal 90. The interface unit 70 may acquire the instructions of the operator from an operating device such as a non-illustrated button or slide switch that is provided on the fluid pressure supply device 30. The operator terminal 90, for example, is a PC (Personal Computer) or a PLC (Programmable Logic Controller).

The timer unit 72 includes a clock circuit or a timer circuit, and measures time. Based on time information from the clock circuit or the timer circuit, the timer unit 72 measures a first predetermined time period TM1 and a second predetermined time period TM2, which will be discussed later.

The flow rate acquisition unit 78 acquires from the flow rate meter 52 the flow rate F measured by the flow rate meter 52. For example, the flow rate F of the fluid may decrease due to the external device 42 being stopped. The flow rate determination unit 74 determines whether or not the flow rate F acquired by the flow rate acquisition unit 78 is less than or equal to a threshold value FT continuously for at least the first predetermined time period TM1.

The pressure adjusting valve control unit 76 controls the pressure adjusting valve 50 using an electrical signal. The pilot valve of the pressure adjusting valve 50 operates in response to the electrical signal output from the pressure adjusting valve control unit 76. By the pilot valve of the pressure adjusting valve 50 being operated, the degree of opening of the main valve of the pressure adjusting valve 50 is adjusted to various levels. In the case that the degree of opening of the main valve is zero, the pressure adjusting valve 50 is in a closed state.

The disconnection valve control unit 80 controls the disconnection valve 54 using an electrical signal. The pilot valve of the disconnection valve 54 operates in response to the electrical signal output from the disconnection valve control unit 80. By the pilot valve of the disconnection valve 54 being operated, the main valve of the disconnection valve 54 is opened and closed.

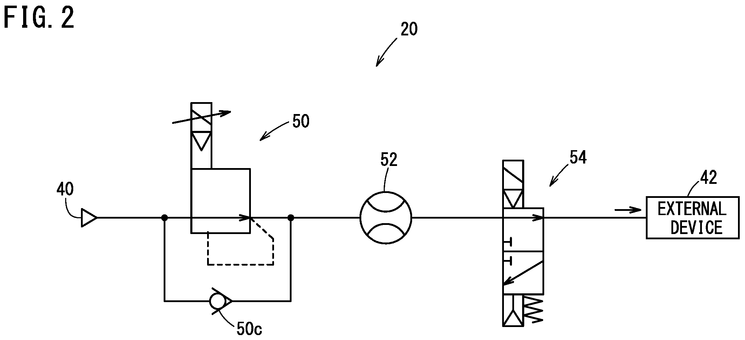

FIG. 2 is a circuit diagram of the valve module 20 in an operation mode and a standby mode. In order to use the fluid in the external device 42, the pressure adjusting valve control unit 76 controls the pressure adjusting valve 50, and thereby adjusts to a first pressure P1 the pressure of the fluid supplied from the fluid supply source 40. A mode in which the fluid is output at the first pressure P1 from the pressure adjusting valve 50 is referred to as the operation mode.

In the operation mode, the main valve of the disconnection valve 54 is open. In the operation mode, the fluid that is output at the first pressure P1 from the pressure adjusting valve 50 flows out of the valve module 20, and is supplied to the external device 42.

It is assumed that, during the operation mode, an instruction C1 indicating that the standby mode has been permitted by the operator is acquired by the interface unit 70. Furthermore, during the operation mode, it is determined by the flow rate determination unit 74 that the flow rate F of the fluid measured by the flow rate meter 52 remains less than or equal to the threshold value FT for at least the first predetermined time period TM1.

In this case, the pressure adjusting valve control unit 76 controls the pressure adjusting valve 50 in a manner so that the fluid is output from the pressure adjusting valve 50 at a second pressure P2 which is lower than the first pressure P1. Stated otherwise, in the case that the flow rate F of the fluid is less than or equal to the threshold value FT for at least the first predetermined time period TM1, and further, the instruction C1 has been issued by the operator, the pressure adjusting valve control unit 76 controls the pressure adjusting valve 50, and thereby causes the fluid to be output at the second pressure P2 from the pressure adjusting valve 50. A mode in which the fluid is output at the second pressure P2 from the pressure adjusting valve 50 is referred to as the standby mode. More specifically, the pressure adjusting valve control unit 76 switches the operation mode to the standby mode.

In the standby mode, there is a possibility that the external device 42 may be stopped, a necessity to supply the fluid at the first pressure P1 may be low, and the fluid at a second pressure P2, which is lower than the first pressure P1, is output from the pressure adjusting valve 50. The pressure adjusting valve control unit 76 instructs the pilot valve of the pressure adjusting valve 50 to cause the degree of opening of the main valve of the pressure adjusting valve 50 to be reduced, in a manner so that the pressure P decreases from the first pressure P1 to the second pressure P2. The main valve of the disconnection valve 54 is maintained open. In the standby mode, in a state in which a pressure P of the fluid has been adjusted to the second pressure P2, the fluid is supplied to the external device 42. In the standby mode, needless consumption of the fluid is reduced as compared with the operation mode.

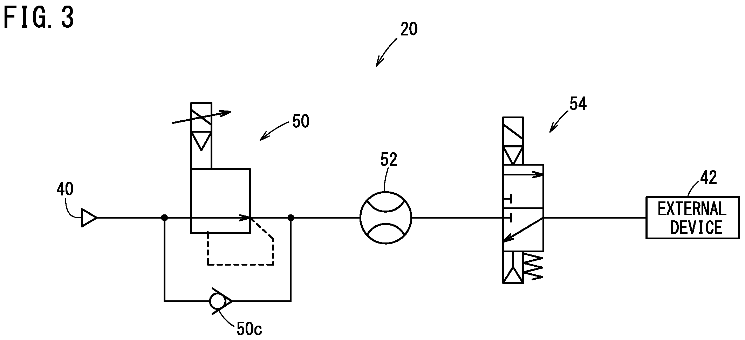

FIG. 3 is a circuit diagram of the valve module 20 in an isolation mode. In the case that the second predetermined time period TM2 has elapsed during the standby mode, the disconnection valve control unit 80 controls the disconnection valve 54, in a manner so that the supply of the fluid output from the pressure adjusting valve 50 to the external device 42 is disconnected. Specifically, the disconnection valve control unit 80 causes the pilot valve of the disconnection valve 54 to close the main valve of the disconnection valve 54. A mode in which the supply of the fluid to the external device 42 is disconnected is referred to as the isolation mode. More specifically, the disconnection valve control unit 80 switches the standby mode to the isolation mode.

In the isolation mode, the disconnection valve control unit 80, together with causing the disconnection of the supply of the fluid to the external device 42, opens the outlet port of the disconnection valve 54 to the atmosphere. Stated otherwise, the outflow port of the valve module 20 is open to the atmosphere.

In the isolation mode, the pressure adjusting valve control unit 76 preferably causes the pilot valve of the pressure adjusting valve 50 to set the degree of opening of the main valve of the pressure adjusting valve 50 to zero. More specifically, it is preferable that the pressure adjusting valve control unit 76 closes the main valve of the pressure adjusting valve 50.

In addition, the pressure adjusting valve 50 includes a check valve 50c. In any one of the operation mode, the standby mode, and the isolation mode, in the case that the fluid pressure supply device 30 is stopped, the supply of the fluid from the fluid supply source 40 is disconnected. When the inlet port of the pressure adjusting valve 50 has become an atmospheric pressure PA, the check valve 50c allows fluid that flows out from the outlet port to flow from the outlet port of the pressure adjusting valve 50 and towards the inlet port. Accordingly, for example, in the case that the fluid pressure supply device 30 is stopped in order to perform maintenance and inspection of the valve module 20, the safety of the inspection operator can be ensured.

Further, in the case that the supply of electrical power to the fluid pressure supply device 30 is suddenly stopped, the valve module 20 may be placed in a normally closed state. When the valve module 20 is placed in the normally closed state, the main valve of the disconnection valve 54, similar to the state shown in FIG. 3, becomes placed in a closed state. In this case, the fluid in the interior of the valve module 20 is discharged, and the safety of the inspection operator can be ensured.

Further, in the case that the supply of electrical power to the fluid pressure supply device 30 is suddenly stopped, the valve module 20 may also be placed in a normally open state. In the state in which the valve module 20 is in a normally open state, similar to the state shown in FIG. 2, the main valve of the pressure adjusting valve 50 and the main valve of the disconnection valve 54 both become placed in the open state. In this case, the supply of the fluid to the external device 42 can be continued.

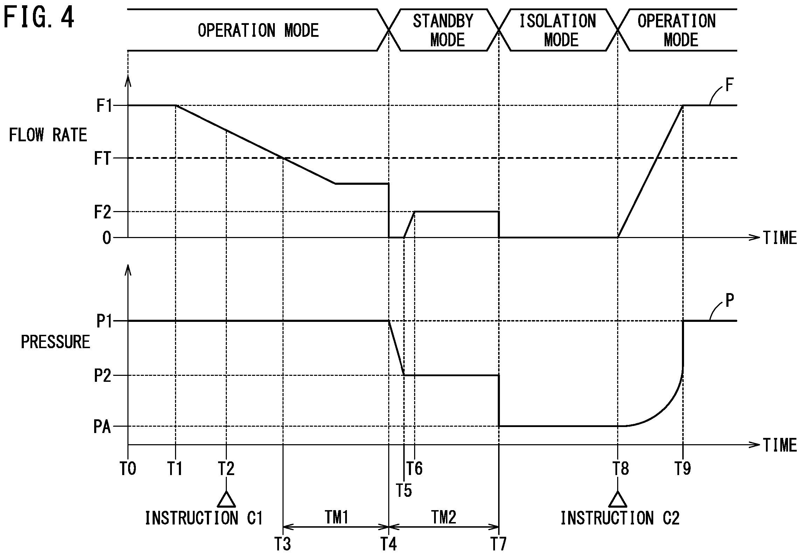

FIG. 4 is a time chart illustrating a change in the flow rate F and the pressure P of the fluid that is supplied to the external device 42. As the time progresses from time T0 to time T9 and thereafter, an aspect by which the flow rate F of the fluid supplied to the external device 42 changes is as shown in FIG. 4. Furthermore, as the time progresses from time T0 to time T9 and thereafter, an aspect by which the pressure P of the fluid supplied to the external device 42 changes is as shown in FIG. 4.

At time T0 in the example shown in FIG. 4, the valve module 20 is operating in the operation mode. At time T0, the fluid which is of a first flow rate F1 is supplied at the first pressure P1 to the external device 42. Thereafter, when the external device 42 stops consuming the fluid due to a stoppage of the external device 42, the flow rate F of the fluid begins to decrease. The time at which the flow rate F of the fluid has started to decrease is defined as a time T1. Thereafter, the flow rate F of the fluid reaches the threshold value FT. The time at which the flow rate F of the fluid has reached the threshold value FT is defined as a time T3.

Moreover, at a time prior to the time T3, the interface unit 70 acquires an instruction C1 from the operator. For example, the time at which the interface unit 70 has acquired the instruction C1 is defined as a time T2 which is later than the time T1 and earlier than the time T3. From the time T3 at which the flow rate F has reached the threshold value FT, the timer unit 72 starts measuring time.

In the example shown in FIG. 4, even after the time T3, the flow rate F is less than or equal to the threshold value FT. A Time T4 is defined as a time at which the first predetermined time period TM1 has elapsed from when the timer unit 72 starts measuring time at time T3. Further, it is assumed that, at time T4, permission to transition to the standby mode has not been canceled by the operator (transitioning to the standby mode has not been prohibited). In this case, at time T4, the flow rate determination unit 74 determines that the flow rate F is less than or equal to the threshold value FT continuously for at least the first predetermined time period TM1. The step in which such a determination step is carried out is referred to as a flow rate determination step. At time T4, the pressure adjusting valve control unit 76 switches the operation mode to the standby mode.

The valve module 20, which has been operated in the operation mode up until time T4, operates in the standby mode from time T4 until time T7. At time T4, the pressure adjusting valve control unit 76 controls the pressure adjusting valve 50 to thereby close the main valve of the pressure adjusting valve 50. At time T4, the flow rate F of the fluid becomes zero. At time T4, the timer unit 72 starts measuring time again.

From time T4 until time T5, the main valve of the pressure adjusting valve 50 is temporarily maintained in a state of being closed. During that period, the fluid is gradually consumed downstream from the valve module 20. For example, in the case that the fluid is air, the air is consumed by air purging or the like in the piping connecting the outflow port of the valve module 20 and the external device 42. Along therewith, as shown in FIG. 4, from time T4, the pressure P of the fluid gradually decreases. The time at which the pressure P of the fluid decreases from the first pressure P1 to the second pressure P2 is defined as a time T5.

At time T5, the pressure adjusting valve control unit 76 controls the pressure adjusting valve 50, in a manner so that the fluid is output at the second pressure P2 from the pressure adjusting valve 50. The step in which such a control process is carried out is referred to as a first pressure adjusting valve control step.

At time T5, the fluid flow rate F begins to increase. The pressure P of the fluid remains at the second pressure P2. The time at which the flow rate F of the fluid reaches a second flow rate F2 is defined as a time T6. From time T6 and thereafter, the fluid of the second flow rate F2 is supplied at the second pressure P2 to the external device 42.

In the standby mode, the timer unit 72 begins measuring time at time T4, and then the second predetermined time period TM2 elapses. The time at which the second predetermined time period TM2 has elapsed is referred to as a time T7. At time T7, the disconnection valve control unit 80 switches the standby mode to the isolation mode. The valve module 20, which has been operated in the standby mode from time T4 until time T7, operates in the isolation mode from time T7 and thereafter.

At time T7, the pressure adjusting valve control unit 76 controls the pressure adjusting valve 50 to thereby close the main valve of the pressure adjusting valve 50. At time T7, the disconnection valve control unit 80 controls the disconnection valve 54, and thereby closes the main valve of the disconnection valve 54. The step in which such a control process is carried out is referred to as a first disconnection valve control step. In accordance with this feature, the supply of the fluid output from the pressure adjusting valve 50 to the external device 42 is disconnected.

Moreover, the control of the pressure adjusting valve 50 may be carried out by the pressure adjusting valve control unit 76 after the control of the disconnection valve 54 has been carried out by the disconnection valve control unit 80. At time T7, the flow rate F of the fluid becomes zero. At time T7, the disconnection valve control unit 80 causes the outlet port of the disconnection valve 54 (the outflow port of the valve module 20) to be opened to the atmosphere. At time T7, the pressure of the outflow port of the valve module 20 decreases to a pressure which is equal to the atmospheric pressure PA.

In the isolation mode, the time at which the interface unit 70 has acquired an instruction C2 from the operator is defined as a time T8. The instruction C2 indicates that an instruction has been issued from the operator to return to the operation mode. At time T8, the pressure adjusting valve control unit 76 switches the isolation mode to the operation mode.

The valve module 20, which has been operated in the isolation mode from time T7 until time T8, operates in the operation mode from time T8 and thereafter. From time T8 to time T9, the pressure adjusting valve control unit 76 controls the pressure adjusting valve 50, and thereby causes the pressure P of the fluid output from the pressure adjusting valve 50 to gradually increase from the atmospheric pressure PA to the first pressure P1 at a rate of increase determined in accordance with time. In this manner, a so-called soft start function is realized. The soft start function prevents the pressure P of the fluid output from the pressure adjusting valve 50 from suddenly increasing from the atmospheric pressure PA to the first pressure P1. The step in which such a control process is carried out is referred to as a second pressure adjusting valve control step.

At time T8, the disconnection valve control unit 80 controls the disconnection valve 54, and thereby causes the fluid output from the pressure adjusting valve 50 to be supplied to the external device 42. The step in which such a control process is carried out is referred to as a second disconnection valve control step. From time T8 to time T9, the flow rate F and the pressure P of the fluid gradually increase. From time T9 and thereafter, the fluid of the first flow rate F1 is supplied at the first pressure P1 to the external device 42.

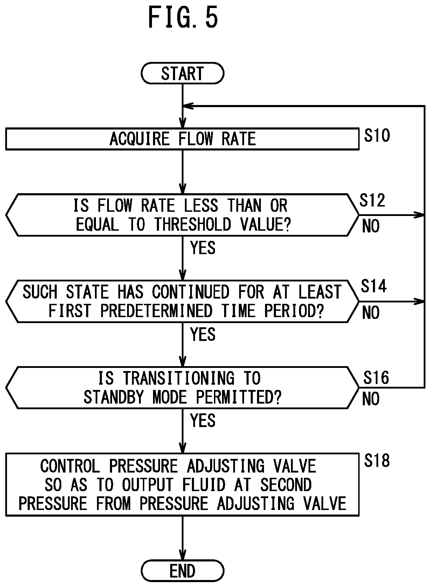

FIG. 5 is a flowchart showing a procedure of a fluid control process performed by the fluid control device 10 in the case that the operation mode is switched to the standby mode. The present processing procedure is carried out by the processing circuit 60 of the fluid control device 10 executing the program that is stored in the storage device 62. When the present processing procedure begins, the valve module 20 is operating in the operation mode. In the operation mode, the fluid which is of the first flow rate F1 is supplied at the first pressure P1 to the external device 42.

When the present processing procedure is started, in step S10, the flow rate acquisition unit 78 acquires from the flow rate meter 52 the flow rate F measured by the flow rate meter 52. The step in which the process of step S10 is carried out is referred to as a flow rate acquisition step.

In step S12, the flow rate determination unit 74 determines whether or not the flow rate F acquired by the flow rate acquisition unit 78 is less than or equal to the threshold value FT. In the case it has become YES in step S12, the present processing procedure proceeds to step S14. In the case it has become NO in step S12, the present processing procedure returns to step S10.

In step S14, the flow rate determination unit 74 determines whether or not the flow rate F is less than or equal to the threshold value FT continuously for at least the first predetermined time period TM1 that was measured by the timer unit 72. In the case it has become YES in step S14, the present processing procedure proceeds to step S16. In the case it has become NO in step S14, the present processing procedure returns to step S10. The step in which the processes of step S12 and step S14 are carried out corresponds to the aforementioned flow rate determination step.

In step S16, the pressure adjusting valve control unit 76 determines whether or not the interface unit 70 has acquired the instruction C1 from the operator. The instruction C1 indicates that the standby mode has been permitted by the operator. In the case it has become YES in step S16, the present processing procedure proceeds to step S18. In the case it has become NO in step S16, then transitioning to the standby mode is prohibited. In this case, permission to transition to the standby mode has not been given from the operator, or alternatively, permission to transition to the standby mode has been canceled by the operator. In the case it has become NO in step S16, the present processing procedure returns to step S10.

In step S18, the pressure adjusting valve control unit 76 controls the pressure adjusting valve 50, in a manner so that the fluid is output at the second pressure P2 from the pressure adjusting valve 50. The step in which the process of step S18 is carried out corresponds to the aforementioned first pressure adjusting valve control step. When the process of step S18 is completed, the present processing procedure comes to an end. The valve module 20 operates in the standby mode.

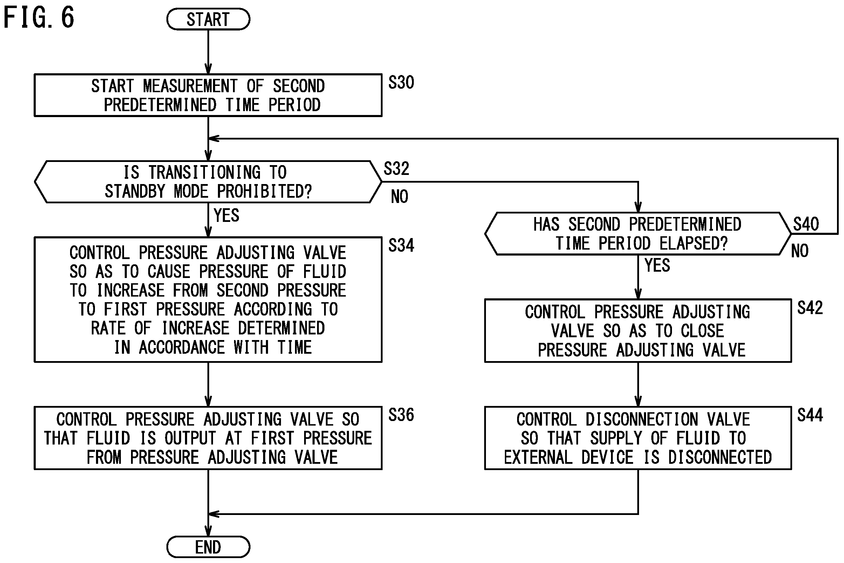

FIG. 6 is a flowchart showing a processing procedure of a fluid control process performed by the fluid control device 10 in the case that the standby mode is switched to the operation mode or the isolation mode. The present processing procedure is carried out by the processing circuit 60 of the fluid control device 10 executing the program that is stored in the storage device 62. When the present processing procedure begins, the valve module 20 is operating in the standby mode. In the standby mode, the fluid which is of the second flow rate F2 is supplied at the second pressure P2 to the external device 42. When the present processing procedure is started, in step S30, the timer unit 72 starts measuring the second predetermined time period TM2.

In step S32, the pressure adjusting valve control unit 76 determines whether or not the interface unit 70 has acquired an instruction C3 from the operator. The instruction C3 indicates that transitioning to the standby mode is prohibited. In the case that the instruction C3 is acquired in the standby mode, the instruction C3 corresponds to a cancellation of the permission to transition to the standby mode from the operator that was made in step S16 of FIG. 5. In the case it has become YES in step S32, the present processing procedure proceeds to step S34. In the case it has become NO in step S32, the present processing procedure proceeds to step S40.

In the case it has become YES in step S32, then in step S34, the pressure adjusting valve control unit 76 controls the pressure adjusting valve 50, and thereby causes the pressure P of the fluid output from the pressure adjusting valve 50 to increase from the second pressure P2 to the first pressure P1 according to a rate of increase determined in accordance with time.

In step S36, the pressure adjusting valve control unit 76 controls the pressure adjusting valve 50, in a manner so that the fluid is output at the first pressure P1 from the pressure adjusting valve 50. When the process of step S36 is completed, the present processing procedure comes to an end. The valve module 20 operates in the operation mode.

In the case it has become NO in step S32, then in step S40, the timer unit 72 determines whether or not the second predetermined time period TM2 has elapsed. In the case it has become YES in step S40, the present processing procedure proceeds to step S42. In the case it has become NO in step S40, the present processing procedure returns to step S32.

In step S42, the pressure adjusting valve control unit 76 controls the pressure adjusting valve 50 to thereby close the pressure adjusting valve 50.

In step S44, the disconnection valve control unit 80 controls the disconnection valve 54, and thereby closes the main valve of the disconnection valve 54. In accordance with this feature, the supply of the fluid output from the pressure adjusting valve 50 to the external device 42 is disconnected. The step in which the process of step S44 is carried out corresponds to the aforementioned first disconnection valve control step. The outflow port of the valve module 20 is open to the atmosphere, and therefore, becomes a pressure which is equal to the atmospheric pressure PA. When the process of step S44 is completed, the present processing procedure comes to an end. The valve module 20 operates in the isolation mode.

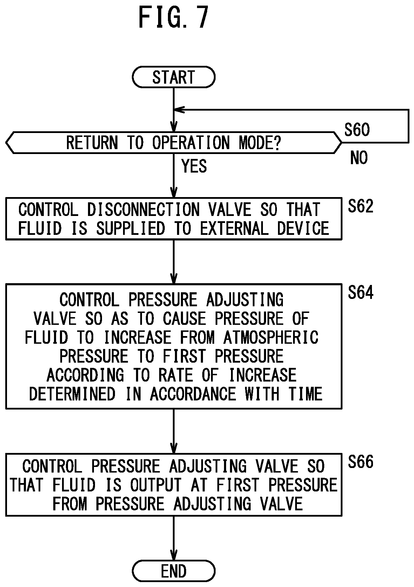

FIG. 7 is a flowchart showing a processing procedure of a fluid control process performed by the fluid control device 10 in the case that the isolation mode is switched to the operation mode. The present processing procedure is carried out by the processing circuit 60 of the fluid control device 10 executing the program that is stored in the storage device 62. When the present processing procedure begins, the valve module 20 is operating in the isolation mode. In the isolation mode, the supply of the fluid output from the pressure adjusting valve 50 to the external device 42 is disconnected. The pressure at the outflow port of the valve module 20 is equal to the atmospheric pressure PA.

When the present processing procedure is started, in step S60, the disconnection valve control unit 80 determines whether or not the interface unit 70 has acquired the instruction C2 from the operator. The instruction C2 indicates that an instruction has been issued from the operator to return to the operation mode. In the case it has become YES in step S60, the present processing procedure proceeds to step S62. In the case it has become NO in step S60, the present processing procedure repeats step S60.

In step S62, the disconnection valve control unit 80 controls the disconnection valve 54, and thereby opens the disconnection valve 54. When the pressure adjusting valve 50 opens in a subsequent process, the fluid output from the pressure adjusting valve 50 is supplied to the external device 42. The step in which the process of step S62 is carried out corresponds to the aforementioned second disconnection valve control step.

In step S64, the pressure adjusting valve control unit 76 controls the pressure adjusting valve 50, and thereby causes the pressure P of the fluid output from the pressure adjusting valve 50 to be increased from the atmospheric pressure PA to the first pressure P1 at a rate of increase determined in accordance with time. In step S66, the pressure adjusting valve control unit 76 controls the pressure adjusting valve 50, in a manner so that the fluid is output at the first pressure P1 from the pressure adjusting valve 50. The step in which the processes of step S64 and step S66 are carried out corresponds to the aforementioned second pressure adjusting valve control step. When the process of step S66 is completed, the present processing procedure comes to an end. The valve module 20 operates in the operation mode.

### [Exemplary Modifications]

The above-described embodiment may be modified in the following manner.

### (Exemplary Modification 1)

In the above-described embodiment, the pressure adjusting valve 50 of the valve module 20 is a proportional control valve that adjusts the pressure of the fluid in response to an electrical signal. The valve module 20A controlled by the fluid control device 10 according to Exemplary Modification 1 includes a pressure adjusting valve 50A that outputs fluid at two types of pressure in response to electrical signals corresponding to ON and OFF, the flow rate meter 52, a throttle valve 100, a switching valve 102, and the disconnection valve 54.

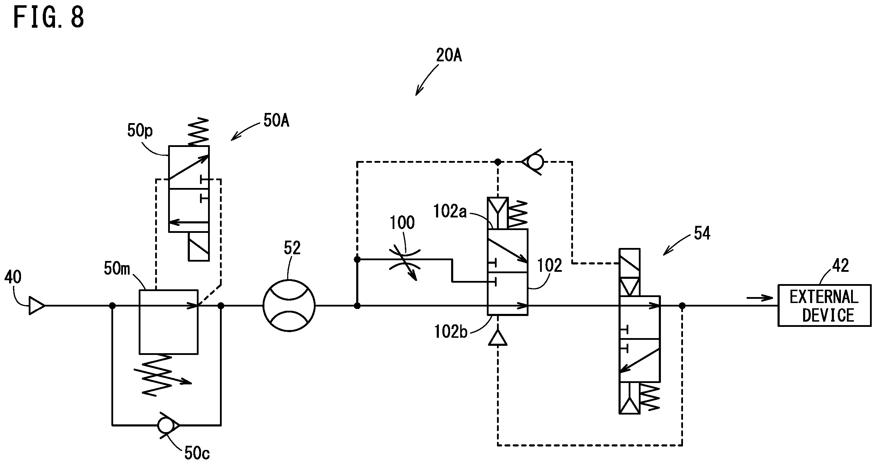

FIG. 8 is a circuit diagram of the valve module 20A in the operation mode. The throttle valve 100 and the switching valve 102 are disposed between the pressure adjusting valve 50A and the disconnection valve 54. The pressure adjusting valve 50A includes a main valve 50m, and a pilot valve 50p that adjusts a degree of opening of the main valve 50m. The fluid supplied at the first pressure P1 from the fluid supply source 40 flows into an inlet port of the pressure adjusting valve 50A.

In the present exemplary modification, in the case that the electrical signal output from the pressure adjusting valve control unit 76 of the fluid control device 10 to the pilot valve 50p of the pressure adjusting valve 50A is OFF, the pressure adjusting valve 50A outputs the fluid while substantially maintaining the first pressure P1 of the fluid supplied from the fluid supply source 40. In the case that the electrical signal output from the pressure adjusting valve control unit 76 to the pilot valve 50p of the pressure adjusting valve 50A is ON, the pressure adjusting valve 50A adjusts the first pressure P1 of the fluid supplied from the fluid supply source 40 to the second pressure P2, and outputs the fluid.

As shown in FIG. 8, in the case that the valve module 20A operates in the operation mode, the electrical signal output from the pressure adjusting valve control unit 76 to the pilot valve 50p of the pressure adjusting valve 50A is OFF. The pressure adjusting valve 50A outputs the fluid at the first pressure P1. The disconnection valve control unit 80 controls the disconnection valve 54, and thereby opens the main valve of the disconnection valve 54.

The first pressure P1 of the fluid output from the pressure adjusting valve 50A presses a first pressure receiving surface 102a of the switching valve 102. A first pressing force S1 of the first pressure P1 with respect to the first pressure receiving surface 102a acts in a direction to press down the position of the switching valve 102. The first pressure P1 of the fluid that flows out from the outlet port of the disconnection valve 54 to the external device 42 presses against a second pressure receiving surface 102b of the switching valve 102. A second pressing force S2 of the first pressure P1 with respect to the second pressure receiving surface 102b acts in a direction to press up the position of the switching valve 102.

The area of the first pressure receiving surface 102a of the switching valve 102 is smaller than the area of the second pressure receiving surface 102b. In such a case, the first pressing force S1 applied to the first pressure receiving surface 102a is smaller than the second pressing force S2 applied to the second pressure receiving surface 102b. Accordingly, as shown in FIG. 8, the position of the switching valve 102 is pressed up. The switching valve 102 causes the fluid output from the pressure adjusting valve 50A to flow, but not via the throttle valve 100, to the disconnection valve 54. In this manner, in the operation mode, the fluid at the first pressure P1 that is output from the pressure adjusting valve 50A is supplied to the external device 42.

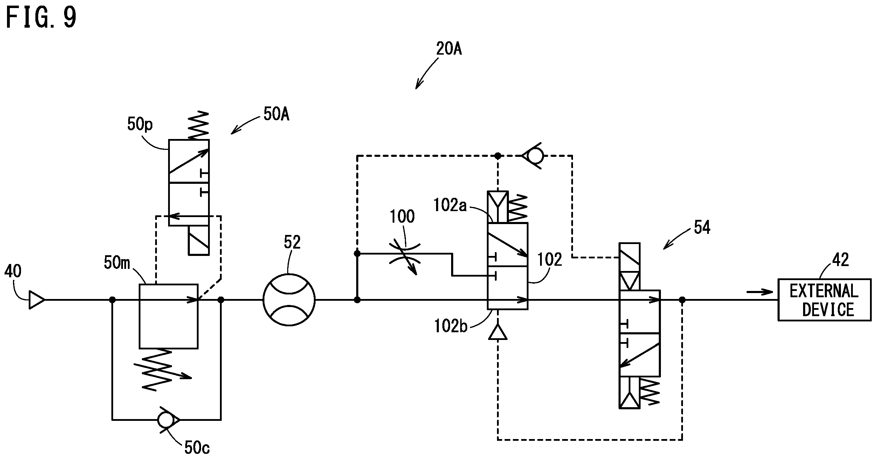

FIG. 9 is a circuit diagram of the valve module 20A in the standby mode. In the case that the valve module 20A operates in the standby mode, the electrical signal output from the pressure adjusting valve control unit 76 to the pilot valve 50p of the pressure adjusting valve 50A is ON. The pressure adjusting valve 50A outputs the fluid at the second pressure P2. The main valve of the disconnection valve 54 remains open.

A third pressing force S3 of the second pressure P2 with respect to the first pressure receiving surface 102a is smaller than a fourth pressing force S4 of the second pressure P2 with respect to the second pressure receiving surface 102b. In such a case, as shown in FIG. 9, the position of the switching valve 102 is pressed up. The switching valve 102 causes the fluid output from the pressure adjusting valve 50A to flow, but not via the throttle valve 100, to the disconnection valve 54. In this manner, in the standby mode, the fluid at the second pressure P2 that is output from the pressure adjusting valve 50A is supplied to the external device 42.

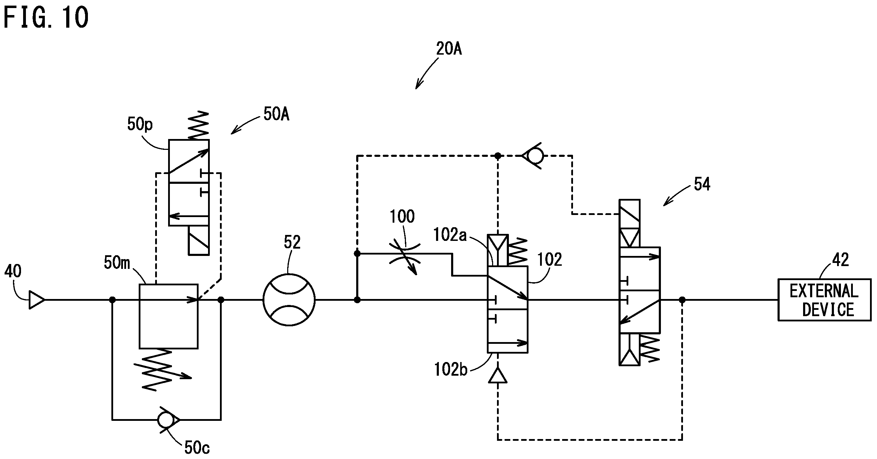

FIG. 10 is a circuit diagram of the valve module 20A in the isolation mode. In the case that the valve module 20A operates in the isolation mode, the electrical signal output from the pressure adjusting valve control unit 76 to the pilot valve 50p of the pressure adjusting valve 50A is OFF. The pressure adjusting valve 50A outputs the fluid at the first pressure P1. Moreover, the pressure adjusting valve 50A may also output the fluid at the second pressure P2. The disconnection valve control unit 80 controls the disconnection valve 54, and thereby closes the main valve of the disconnection valve 54. The disconnection valve control unit 80 opens the outlet port of the disconnection valve 54 to the atmosphere.

The pressure at the outlet port of the disconnection valve 54 is equal to the atmospheric pressure PA. A fifth pressing force S5 of the second pressure P2 with respect to the first pressure receiving surface 102a is larger than a sixth pressing force S6 of the atmospheric pressure PA with respect to the second pressure receiving surface 102b. In such a case, as shown in FIG. 10, the position of the switching valve 102 is pressed down.

When the isolation mode is switched to the operation mode, the disconnection valve control unit 80 controls the disconnection valve 54, and thereby opens the main valve of the disconnection valve 54. The pressure adjusting valve 50A outputs the fluid at the first pressure P1. The switching valve 102 causes the fluid output from the pressure adjusting valve 50A to flow via the throttle valve 100 to the disconnection valve 54. The pressure at the outlet port of the disconnection valve 54 gradually rises.

Along therewith, when the pressing force of the pressure at the outlet port of the disconnection valve 54 with respect to the second pressure receiving surface 102b becomes greater than the first pressing force S1 of the first pressure P1 with respect to the first pressure receiving surface 102a, the position of the switching valve 102 is pushed up. In this case, as shown in FIG. 8, the switching valve 102 causes the fluid output from the pressure adjusting valve 50A to flow, but not via the throttle valve 100, to the disconnection valve 54. In this manner, a so-called soft start function is realized. Depending on the pressure of the fluid that flows out from the disconnection valve 54 to the external device 42, the switching valve 102 either causes the fluid that is output from the pressure adjusting valve 50A to flow via the throttle valve 100 to the disconnection valve 54, or alternatively, causes the fluid to flow, but not via the throttle valve 100, to the disconnection valve 54.

In the present exemplary modification, in the case that the operation mode is switched to the standby mode, the flowchart showing the processing procedure of the fluid control process performed by the fluid control device 10 coincides with the flowchart shown in FIG. 5. Therefore, a description of the processing procedure will be omitted herein.

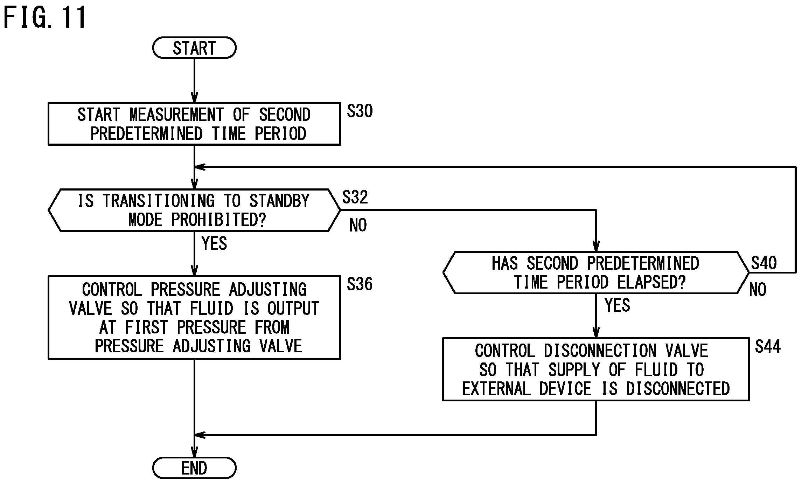

FIG. 11 is a flowchart showing a processing procedure of a fluid control process performed by the fluid control device 10 in the case that the standby mode is switched to the operation mode or the isolation mode. The present processing procedure is carried out by the processing circuit 60 of the fluid control device 10 executing the program that is stored in the storage device 62.

The reference characters applied to the steps of the present processing procedure shown in FIG. 11 correspond to a part of the reference characters applied to the steps of the processing procedure shown in FIG. 6. In the steps whose reference characters coincide with each other, the same processing is executed, and therefore, descriptions of the processing in each of those steps shown in FIG. 11 will be omitted herein. The flowchart shown in FIG. 11 does not include step S34 and step S42 shown in FIG. 6. Accordingly, when the process of step S32 is completed, the process of step S36 is carried out. In the case it has become YES in step S40, the present processing procedure proceeds to step S44.

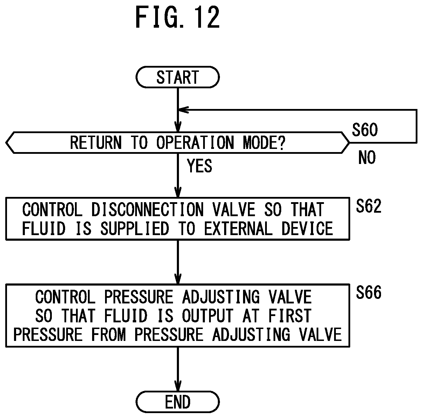

FIG. 12 is a flowchart showing a procedure of a fluid control process performed by the fluid control device 10 in the case that the isolation mode is switched to the operation mode. The present processing procedure is carried out by the processing circuit 60 of the fluid control device 10 executing the program that is stored in the storage device 62.

The reference characters applied to the steps of the present processing procedure shown in FIG. 12 correspond to a part of the reference characters applied to the steps of the processing procedure shown in FIG. 7. In the steps whose reference characters coincide with each other, the same processing is executed, and therefore, descriptions of the processing in each of those steps shown in FIG. 12 will be omitted herein. The flowchart shown in FIG. 12 does not include step S64 shown in FIG. 7. Accordingly, when the process of step S62 is completed, the process of step S66 is carried out.

### (Exemplary Modification 2)

In the above-described embodiment, when the second predetermined time period TM2 elapses during the standby mode, the standby mode is switched to the isolation mode. In the fluid control device 10 according to the Exemplary Modification 2, in the case that transitioning to the isolation mode has been prohibited by the operator, even if the second predetermined time period TM2 period has elapsed during the standby mode, the standby mode is maintained.

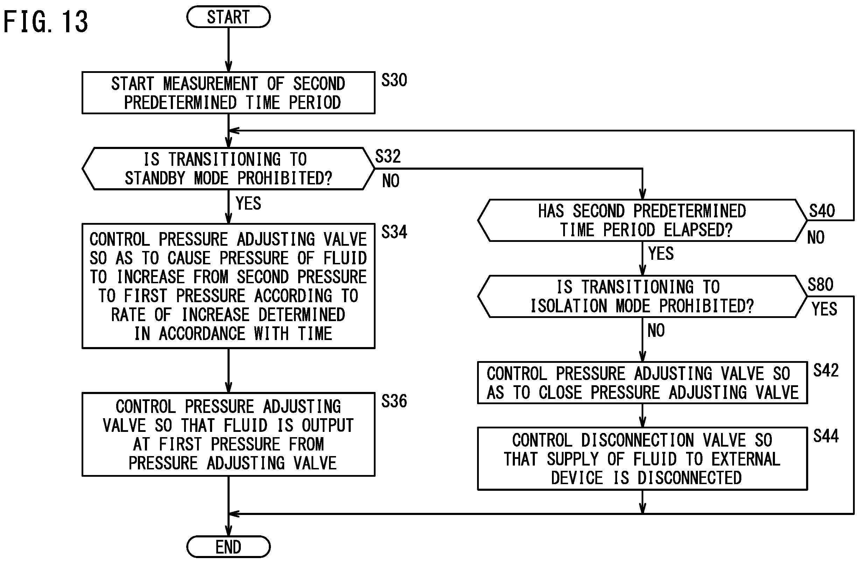

FIG. 13 is a flowchart for describing a procedure of a fluid control process performed by the fluid control device 10 in the case that there was an instruction C4 to prohibit a transition to the isolation mode. The present processing procedure is carried out by the processing circuit 60 of the fluid control device 10 executing the program that is stored in the storage device 62. A portion of the reference characters applied to the steps of the present processing procedure shown in FIG. 13 coincide with the reference characters applied to the steps of the processing procedure shown in FIG. 6. In the steps whose reference characters coincide with each other, the same processing is executed, and therefore, descriptions of the processing in those steps will be omitted herein.

In FIG. 13, differently from FIG. 6, the process of step S80 is added thereto. In the case it has become YES in step S40, the present processing procedure proceeds to step S80. In step S80, the pressure adjusting valve control unit 76 determines whether or not the interface unit 70 has acquired the instruction C4 from the operator. The instruction C4 indicates that transitioning to the isolation mode is prohibited.

In the case it has become YES in step S80, the present processing procedure comes to an end. Accordingly, even if the second predetermined time period TM2 has elapsed during the standby mode, the standby mode is maintained. In the case it has become NO in step S80, the present processing procedure proceeds to step S42.

### (Exemplary Modification 3)

In the fluid control device 10 according to Exemplary Modification 3, in the case that an instruction is issued from the operator to return to the standby mode, the isolation mode is switched to the standby mode.

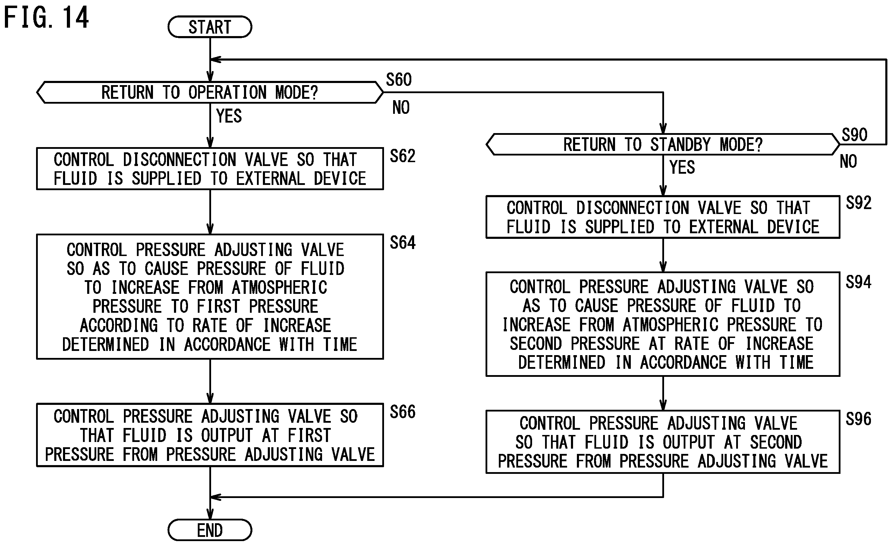

FIG. 14 is a flowchart for describing a procedure of a fluid control process performed by the fluid control device 10 in the case that the isolation mode is switched to the standby mode. The present processing procedure is carried out by the processing circuit 60 of the fluid control device 10 executing the program that is stored in the storage device 62. A portion of the reference characters applied to the steps of the present processing procedure shown in FIG. 14 coincide with the reference characters applied to the steps of the processing procedure shown in FIG. 7. In the steps whose reference characters coincide with each other, the same processing is executed, and therefore, descriptions of the processing in those steps will be omitted herein.

In FIG. 14, differently from FIG. 7, step S90, step S92, step S94, and step S96 are added thereto. In the case it has become NO in step S60, the present processing procedure proceeds to step S90. In step S90, the pressure disconnection valve control unit 80 determines whether or not the interface unit 70 has acquired an instruction C5 from the operator. The instruction C5 indicates that an instruction has been issued from the operator to return to the standby mode. In the case it has become YES in step S90, the present processing procedure proceeds to step S92. In the case it has become NO in step S90, the present processing procedure returns to step S60.

In step S92, the disconnection valve control unit 80 controls the disconnection valve 54, and thereby opens the disconnection valve 54. When the pressure adjusting valve 50 opens in a subsequent process, the fluid output from the pressure adjusting valve 50 is supplied to the external device 42.

In step S94, the pressure adjusting valve control unit 76 controls the pressure adjusting valve 50, and thereby causes the pressure P of the fluid output from the pressure adjusting valve 50 to be increased from the atmospheric pressure PA to the second pressure P2 at a rate of increase determined in accordance with time. In step S96, the pressure adjusting valve control unit 76 controls the pressure adjusting valve 50, in a manner so that the fluid is output at the second pressure P2 from the pressure adjusting valve 50. When the process of step S96 is completed, the present processing procedure comes to an end. The valve module 20 operates in the standby mode.

### (Exemplary Modification 4)

In the above-described embodiment, in the case it is determined that the flow rate F acquired during the operation mode is less than or equal to the threshold value FT continuously for at least the first predetermined time period TM1, and further, that the standby mode has been permitted by the operator, the operation mode is switched to the standby mode. In the fluid control device 10 according to the Exemplary Modification 4, in the case that transitioning to the standby mode has been prohibited beforehand by the operator, the operation mode is maintained.

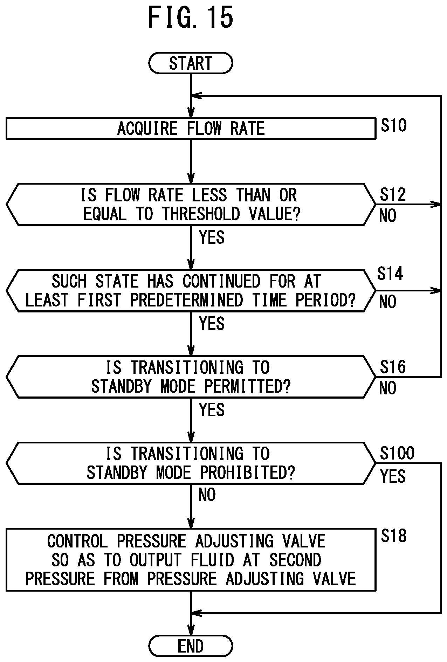

FIG. 15 is a flowchart for describing a procedure of a fluid control process performed by the fluid control device 10 in the case that there was an instruction C3 to prohibit a transition to the standby mode. The present processing procedure is carried out by the processing circuit 60 of the fluid control device 10 executing the program that is stored in the storage device 62. A portion of the reference characters applied to the steps of the present processing procedure shown in FIG. 15 coincide with the reference characters applied to the steps of the processing procedure shown in FIG. 5. In the steps whose reference characters coincide with each other, the same processing is executed, and therefore, descriptions of the processing in those steps will be omitted herein.

In FIG. 15, differently from FIG. 5, the process of step S100 is added thereto. In the case it has become YES in step S16, the present processing procedure proceeds to step S100. In step S100, the pressure adjusting valve control unit 76 determines whether or not the interface unit 70 has acquired the instruction C3 from the operator. The instruction C3 indicates that transitioning to the standby mode is prohibited.

In the case that the instruction C3 has been acquired beforehand in the operation mode, the answer becomes YES in step S100. In the case it has become YES in step S100, the present processing procedure comes to an end. The valve module 20 operates in the operation mode. In the case it has become NO in step S100, the present processing procedure proceeds to step S18.

### (Exemplary Modification 5)

In the above-described embodiment, the pressure adjusting valve 50 is a proportional control valve that adjusts the pressure of the fluid in response to an electrical signal. The pilot valve of the pressure adjusting valve 50 operates in response to the electrical signal output by the pressure adjusting valve control unit 76. Having done so, the pressure adjusting valve control unit 76 that causes the pilot valve of the pressure adjusting valve 50 to be operated may be installed integrally together with a housing of the pressure adjusting valve 50. More specifically, the pressure adjusting valve control unit 76 and the pressure adjusting valve 50 may be an integrated module MR.

Similarly, the disconnection valve control unit 80 and the disconnection valve 54 may be an integrated module MS. The interface unit 70, the timer unit 72, the flow rate determination unit 74, the flow rate acquisition unit 78, and the flow rate meter 52 may be integrated together into a module MM. Each of the modules MR, MS, and MM is capable of being replaced.

For example, the module MR that is old but is currently in use can be replaced with a new module MR. The module MS that is old but is currently in use can be replaced with a new module MS. The module MM that is old but is currently in use can be replaced with a new module MM**.**

In the above-described Exemplary Modification 1, in the pressure adjusting valve 50A, the pilot valve 50p of the pressure adjusting valve 50A operates in response to an electrical signal corresponding to ON and OFF. Having done so, the pressure adjusting valve control unit 76 that operates the pilot valve 50p of the pressure adjusting valve 50A may be mounted integrally together with a housing of the main valve 50m and the pilot valve 50p of the pressure adjusting valve 50A. More specifically, the pressure adjusting valve control unit 76 and the pressure adjusting valve 50A may be an integrated module MP.

Similarly, the disconnection valve control unit 80, the disconnection valve 54, the throttle valve 100, and the switching valve 102 may be integrated together into a module MG. The interface unit 70, the timer unit 72, the flow rate determination unit 74, the flow rate acquisition unit 78, and the flow rate meter 52 may be integrated together into a module MM**.** Each of the modules MP, MG, and MM is capable of being replaced.

For example, the module MP that is old but is currently in use can be replaced with a new module MP. The module MG that is old but is currently in use can be replaced with a new module MG. The module MM that is old but is currently in use can be replaced with a new module MM**.**

### (Exemplary Modification 6)

The flow rate meter 52, in addition to the flow rate F of the fluid passing through the valve module 20, may also measure the temperature and the pressure of the fluid. The flow rate acquisition unit 78 acquires from the flow rate meter 52 the flow rate F, the temperature, and the pressure measured by the flow rate meter 52. The flow rate acquisition unit 78, by performing a calculation using the flow rate F acquired from the flow rate meter 52, is capable of acquiring a cumulative flow rate.

The interface unit 70 issues a notification to the operator terminal 90 of information in relation to the flow rate F of the fluid, the cumulative flow rate, the temperature, and the pressure, as well as other information. The other information that is notified to the operator from the interface unit 70 includes information on an operating state of the valve module 20, and information on a body size of the fluid pressure supply device 30.

The processing circuit of the operator terminal 90, by executing a program that is stored in a storage device of the operator terminal 90, outputs to the display device of the operator terminal 90 information that is notified from the fluid control device 10. The processing circuit of the operator terminal 90, by executing the program that is stored in the storage device of the operator terminal 90, outputs to the display device of the operator terminal 90 a proposal screen for proposing a new fluid pressure supply device 30 with a body size that is compatible with the information notified from the fluid control device 10.

### [Inventions Obtained from the Embodiment]

The inventions that can be grasped from the above-described embodiment and the exemplary modifications will be described below.

(1) In the fluid control device (10) that controls the valve module (20) equipped with the pressure adjusting valve (50) that is capable of adjusting the pressure of the fluid supplied from the fluid supply source (40), and the disconnection valve (54) that is capable of disconnecting the supply of the fluid output from the pressure adjusting valve to the external device (42), the fluid control device comprises the flow rate acquisition unit (78) that acquires from the flow rate meter (52) the flow rate (F) of the fluid passing through the valve module, the flow rate determination unit (74) that determines whether or not the flow rate that was acquired is less than or equal to the threshold value (FT) continuously for at least the first predetermined time period (TM1), the pressure adjusting valve control unit (76) which is configured, in the case that it is determined that the flow rate acquired during the operation mode in which the fluid is output at the first pressure (P1) from the pressure adjusting valve is continuously less than or equal to the threshold value for at least the first predetermined time period, and the standby mode from the operator is permitted, to control the pressure adjusting valve in a manner so that the fluid is output from the pressure adjusting valve at the second pressure (P2) which is lower than the first pressure, and switches the operation mode to the standby mode, and the disconnection valve control unit (80) which is configured, in the case that the second predetermined time period (TM2) has elapsed during the standby mode, to control the disconnection valve in a manner so that the supply of the fluid output from the pressure adjusting valve to the external device is disconnected, and switches the standby mode to an isolation mode. In accordance with such features, the fluid control device, together with supplying the fluid to the external device at a pressure that is lower than normal, also can stop the supply of the fluid to the external device. Since the supply of the fluid is automatically stopped, in the case that the operation of the external device is stopped for a prolonged time period, the consumption of the fluid can be reduced.
(2) The fluid output from the pressure adjusting valve may flow out from the outflow port of the valve module and may be supplied to the external device, and the disconnection valve control unit may control the disconnection valve, and together with causing the supply of the fluid to the external device to be disconnected, may cause the outflow port of the valve module to be opened to the atmosphere. In accordance with this feature, it is possible to cause the pressure at the outflow port of the valve module to be reduced quickly.
(3) In the case that in the isolation mode an instruction is issued from the operator to return to the operation mode, the pressure adjusting valve control unit may control the pressure adjusting valve, and may thereby cause the fluid to be output at the first pressure from the pressure adjusting valve, and the disconnection valve control unit may control the disconnection valve, and may thereby cause the fluid output from the pressure adjusting valve to be supplied to the external device. In accordance with this feature, it is possible to switch the isolation mode to the operation mode at an appropriate timing.
(4) In the isolation mode, in the case that an instruction is issued from the operator to return to the standby mode, the disconnection valve control unit may control the disconnection valve, and may thereby cause the disconnection of the fluid to be released. In accordance with this feature, at an appropriate timing, it is possible to resume the supply of the fluid at the first pressure to the external device.
(5) In the case that an instruction from the operator to transition to the isolation mode is prohibited, even if the second predetermined time period has elapsed during the standby mode, the disconnection valve control unit need not necessarily switch the standby mode to the isolation mode. In accordance with this feature, even in the case that the operation of the external device is stopped for a prolonged time period, it is possible to shorten the time required to return to the operation mode.
(6) In the case that, in the standby mode, the standby mode from the operator is prohibited, the pressure adjusting valve control unit may control the pressure adjusting valve, and may thereby cause the fluid to be output at the first pressure from the pressure adjusting valve, and may switch the standby mode to the operation mode. In accordance with this feature, it is possible to quickly resume the supply of the fluid to the external device at the first pressure.
(7) In the case that an instruction from the operator to transition to the standby mode is prohibited, even if it is determined that the flow rate that was acquired during the operation mode is less than or equal to the threshold value continuously for at least the first predetermined time period, the pressure adjusting valve control unit need not necessarily switch the operation mode to the standby mode. In accordance with this feature, it is possible for the supply of the fluid to be maintained at the first pressure.
(8) The pressure adjusting valve may be a proportional control valve that adjusts the pressure of the fluid in response to an electrical signal, and in the isolation mode, the pressure adjusting valve control unit may control the pressure adjusting valve, and may thereby close the pressure adjusting valve. In accordance with this feature, it is possible to prevent the deterioration of the components that make up the valve module.
(9) The pressure adjusting valve may be a proportional control valve that adjusts the pressure of the fluid in response to an electrical signal, and the pressure adjusting valve control unit may control the pressure adjusting valve, and may thereby cause the pressure of the fluid adjusted by the pressure adjusting valve to be increased at a rate of increase determined in accordance with time. In accordance with this feature, a soft start-up function can be realized. In the case that the external device to which the fluid is supplied includes a cylinder, the rod can be prevented from flying out due to a sudden change in pressure.
(10) The valve module may include the throttle valve (100) and the switching valve (102) between the pressure adjusting valve and the disconnection valve, and the switching valve, depending on the pressure of the fluid that flows out from the disconnection valve to the external device, may cause the fluid output from the pressure adjusting valve to flow to the disconnection valve via the throttle valve, or alternatively, may cause the fluid to flow, but not via the throttle valve, to the disconnection valve. In accordance with this feature, a soft start-up function can be realized. In the case that the external device to which the fluid is supplied includes a cylinder, the rod can be prevented from flying out due to a sudden change in pressure.
(11) The fluid pressure supply device (30) comprises the fluid control device, and the valve module. In accordance with this feature, it is possible to provide the fluid pressure supply device that automatically stops the supply of the fluid to the external device that is stopped for a prolonged time period.
(12) In the fluid control method that controls the valve module (20) equipped with the pressure adjusting valve (50) that is capable of adjusting the pressure of the fluid supplied from the fluid supply source (40), and the disconnection valve (54) that is capable of disconnecting the supply of the fluid output from the pressure adjusting valve to the external device (42), the fluid control method comprises the flow rate acquisition step of acquiring from the flow rate meter (52) the flow rate (F) of the fluid passing through the valve module, the flow rate determination step of determining whether or not the flow rate that was acquired is less than or equal to the threshold value (FT) continuously for at least the first predetermined time period (TM1), the first pressure adjusting valve controlling step in which, in the case that it is determined that the flow rate acquired during the operation mode in which the fluid is output at the first pressure (P1) from the pressure adjusting valve is continuously less than or equal to the threshold value for at least the first predetermined time period, and the standby mode from the operator is permitted, the pressure adjusting valve is controlled at the second pressure (P2) which is lower than the first pressure, and the operation mode is switched to the standby mode, and the first disconnection valve controlling step in which, in the case that the second predetermined time period (TM2) has elapsed during the standby mode, the disconnection valve is controlled in a manner so that the supply of the fluid output from the pressure adjusting valve to the external device is disconnected, and the standby mode is switched to the isolation mode. In accordance with such features, together with it becoming possible to supply the fluid to the external device at a pressure that is lower than normal, it also becomes possible to stop the supply of the fluid to the external device. Since the supply of the fluid is automatically stopped, in the case that the operation of the external device is stopped for a prolonged time period, the consumption of the fluid can be reduced.
(13) In the fluid control method, there may further be provided the second pressure adjusting valve controlling step in which, in the case that in the isolation mode an instruction is issued from the operator to return to the operation mode, the pressure adjusting valve may be controlled in a manner so that the fluid is output at the first pressure from the pressure adjusting valve, and the second disconnection valve controlling step in which, when the second pressure adjusting valve controlling step is carried out, the disconnection valve may be controlled in a manner so that the fluid that is output from the pressure adjusting valve is supplied to the external device. In accordance with this feature, it is possible to switch the isolation mode to the operation mode at an appropriate timing.

Moreover, it should be noted that the present invention is not limited to the disclosure described above, and various alternative or additional configurations can be adopted therein without departing from the essence and gist of the present invention.

### DESCRIPTION OF REFERENCE NUMERALS

- 10: fluid control device
- 20: valve module
- 30: fluid pressure supply device
- 40: fluid supply source
- 42: external device
- 50: pressure adjusting valve
- 52: flow rate meter
- 54: disconnection valve
- 60: processing circuit
- 62: storage device
- 70: interface unit
- 72: time measurement unit
- 74: flow rate determination unit
- 76: pressure adjusting valve control unit
- 78: flow rate acquisition unit
- 80: disconnection valve control unit
- 90: operator terminal
- 100: throttle valve
- 102: switching valve

## Claims

1. A fluid control device (10) configured to control a valve module (20) equipped with a pressure adjusting valve (50) configured to be capable of adjusting a pressure of a fluid supplied from a fluid supply source (40), and a disconnection valve (54) configured to be capable of disconnecting a supply of the fluid output from the pressure adjusting valve to an external device (42), the fluid control device comprising:
a flow rate acquisition unit (78) configured to acquire from a flow rate meter (52) a flow rate (F) of the fluid passing through the valve module;
a flow rate determination unit (74) configured to determine whether or not the flow rate that was acquired is less than or equal to a threshold value (FT) continuously for at least a first predetermined time period (TM1);
a pressure adjusting valve control unit (76) which is configured, in the case that it is determined that the flow rate acquired during an operation mode in which the fluid is output at a first pressure (P1) from the pressure adjusting valve is continuously less than or equal to the threshold value for at least the first predetermined time period, and a standby mode from an operator is permitted, to control the pressure adjusting valve in a manner so that the fluid is output from the pressure adjusting valve at a second pressure (P2) which is lower than the first pressure, and to switch the operation mode to the standby mode; and
a disconnection valve control unit (80) which is configured, in the case that a second predetermined time period (TM2) has elapsed during the standby mode, to control the disconnection valve in a manner so that the supply of the fluid output from the pressure adjusting valve to the external device is disconnected, and to switch the standby mode to an isolation mode.

2. The fluid control device according to claim 1, wherein:
the fluid output from the pressure adjusting valve flows out from an outflow port of the valve module and is supplied to the external device; and
the disconnection valve control unit controls the disconnection valve, and together with causing the supply of the fluid to the external device to be disconnected, causes the outflow port of the valve module to be opened to the atmosphere.

3. The fluid control device according to claim 1, wherein, in the case that in the isolation mode an instruction is issued from the operator to return to the operation mode, the pressure adjusting valve control unit controls the pressure adjusting valve, and thereby causes the fluid to be output at the first pressure from the pressure adjusting valve, and the disconnection valve control unit controls the disconnection valve, and thereby causes the fluid output from the pressure adjusting valve to be supplied to the external device.

4. The fluid control device according to claim 1, wherein, in the isolation mode, in the case that an instruction is issued from the operator to return to the standby mode, the disconnection valve control unit controls the disconnection valve, and thereby causes the disconnection of the fluid to be released.

5. The fluid control device according to claim 1, wherein, in the case that an instruction from the operator to transition to the isolation mode is prohibited, even if the second predetermined time period has elapsed during the standby mode, the disconnection valve control unit does not switch the standby mode to the isolation mode.

6. The fluid control device according to claim 1, wherein, in the case that in the standby mode the standby mode is prohibited from the operator, the pressure adjusting valve control unit controls the pressure adjusting valve, and thereby causes the fluid to be output at the first pressure from the pressure adjusting valve, and switches the standby mode to the operation mode.

7. The fluid control device according to claim 1, wherein, in the case that an instruction from the operator to transition to the standby mode is prohibited, even if it is determined that the flow rate that was acquired during the operation mode is less than or equal to the threshold value continuously for at least the first predetermined time period, the pressure adjusting valve control unit does not switch the operation mode to the standby mode.

8. The fluid control device according to claim 1, wherein:
the pressure adjusting valve is a proportional control valve configured to adjust the pressure of the fluid in response to an electrical signal; and
in the isolation mode, the pressure adjusting valve control unit controls the pressure adjusting valve and thereby closes the pressure adjusting valve.

9. The fluid control device according to claim 1, wherein:
the pressure adjusting valve is a proportional control valve configured to adjust the pressure of the fluid in response to an electrical signal; and
the pressure adjusting valve control unit controls the pressure adjusting valve and thereby causes the pressure of the fluid adjusted by the pressure adjusting valve to be increased at a rate of increase determined in accordance with time.

10. The fluid control device according to claim 3, wherein:
the valve module includes a throttle valve (100) and a switching valve (102) between the pressure adjusting valve and the disconnection valve; and
the switching valve, depending on the pressure of the fluid that flows out from the disconnection valve to the external device, causes the fluid output from the pressure adjusting valve to flow to the disconnection valve via the throttle valve, or alternatively, causes the fluid to flow, but not via the throttle valve, to the disconnection valve.

11. A fluid pressure supply device (30) comprising:
the fluid control device according to any one of claims 1 to 10; and
the valve module.

12. A fluid control method of controlling a valve module (20) equipped with a pressure adjusting valve (50) configured to be capable of adjusting a pressure of a fluid supplied from a fluid supply source (40), and a disconnection valve (54) configured to be capable of disconnecting a supply of the fluid output from the pressure adjusting valve to an external device (42), the fluid control method comprising:
a flow rate acquisition step of acquiring from a flow rate meter (52) a flow rate (F) of the fluid passing through the valve module;
a flow rate determination step of determining whether or not the flow rate that was acquired is less than or equal to a threshold value (FT) continuously for at least a first predetermined time period (TM1);
a first pressure adjusting valve controlling step in which, in the case that it is determined that the flow rate acquired during an operation mode in which the fluid is output at a first pressure (P1) from the pressure adjusting valve is continuously less than or equal to the threshold value for at least the first predetermined time period, and a standby mode from an operator is permitted, the pressure adjusting valve is controlled at a second pressure (P2) which is lower than the first pressure, and the operation mode is switched to the standby mode; and
a first disconnection valve controlling step in which, in the case that a second predetermined time period (TM2) has elapsed during the standby mode, the disconnection valve is controlled in a manner so that the supply of the fluid output from the pressure adjusting valve to the external device is disconnected, and the standby mode is switched to an isolation mode.

13. The fluid control method according to claim 12, further comprising:
a second pressure adjusting valve controlling step in which, in the case that in the isolation mode an instruction is issued from the operator to return to the operation mode, the pressure adjusting valve is controlled in a manner so that the fluid is output at the first pressure from the pressure adjusting valve; and
a second disconnection valve controlling step in which, when the second pressure adjusting valve controlling step is carried out, the disconnection valve is controlled in a manner so that the fluid that is output from the pressure adjusting valve is supplied to the external device.
